(19)

Europäisches Patentamt

European Patent Office

Office européen des brevets

(11) **EP 4 768 744 A1**

(12) **EUROPEAN PATENT APPLICATION**
published in accordance with Art. 153(4) EPC

(43) Date of publication:
01.07.2026  Bulletin 2026/27

(21) Application number: 24856550.9

(22) Date of filing: 23.08.2024

(51) International Patent Classification (IPC):
*F16C 33/78* (2006.01)     *C10M 107/02* (2006.01)
*C10M 115/08* (2006.01)    *C10M 129/68* (2006.01)
*C10M 135/10* (2006.01)    *C10M 159/24* (2006.01)
*C10M 171/00* (2006.01)    *C10M 171/02* (2006.01)
*F16C 19/06* (2006.01)     *F16C 19/18* (2006.01)
*F16J 15/18* (2006.01)     *F16J 15/324* (2016.01)
*F16J 15/3232* (2016.01)   *C10N 10/04* (2006.01)
*C10N 20/02* (2006.01)     *C10N 30/00* (2006.01)
*C10N 40/02* (2006.01)

(52) Cooperative Patent Classification (CPC):
**C10M 107/02; C10M 115/08; C10M 129/68;**
**C10M 135/10; C10M 159/24; C10M 171/00;**
**C10M 171/02; F16C 19/06; F16C 19/18;**
**F16C 33/78; F16J 15/18; F16J 15/3232;**
**F16J 15/324;** C10N 2010/04; C10N 2020/02;
(Cont.)

(86) International application number:
**PCT/JP2024/030112**

(87) International publication number:
**WO 2025/041862 (27.02.2025 Gazette 2025/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  24.08.2023   JP 2023136696
24.08.2023   JP 2023136697

(71) Applicant: **NTN Corporation**
**Osaka-shi Osaka 530-0005 (JP)**

(72) Inventors:
• **ITO, Motohiro**
**Kuwana-shi, Mie 511-0867 (JP)**
• **SEKIYA, Toru**
**Kuwana-shi, Mie 511-0867 (JP)**

(74) Representative: **Henkel & Partner mbB**
**Patentanwaltskanzlei, Rechtsanwaltskanzlei**
**Maximiliansplatz 21**
**80333 München (DE)**

(54) **SEALING DEVICE**

(57)    Provided are a sealing device capable of achieving both low torque and high sealability by improving grease applied to a seal lip and a mating member thereof, and a rotating component using the sealing device. A seal ring 14 is fixed to a fixed-side member 2 of a rotating component, is in sliding contact with a rotating-side member 15, and has a seal lip in sliding contact with the rotating-side member 15, grease being applied to a sliding contact surface of the seal lip, in which the grease contains a base oil, a thickener, and an additive, and an apparent viscosity of the grease at a shear rate of 1000 s$^{-1}$ at 60°C is 0.22 Pa·s or more.

Fig.1

**(Cont. next page)**

(52) Cooperative Patent Classification (CPC): (Cont.)
C10N 2030/00; C10N 2040/02

**Description**

TECHNICAL FIELD

The present invention relates to a sealing device and a rotating component including the sealing device, and more particularly to a sealed rolling bearing including a seal member, and particularly to a sealed rolling bearing that supports an axle, such as a hub bearing.

BACKGROUND ART

In general, a lubricant composition such as lubricating oil or grease is enclosed in a rolling bearing. Since the bearing in which the lubricant composition is enclosed has a long life, does not require an external lubricating unit or the like, and is inexpensive, the bearing is often used for general-purpose applications such as automobiles and industrial equipment. In particular, when high sealability is required, a contact type sealing device is used in which a seal lip of a seal member is brought into contact with a sliding surface of a mating member such as a bearing ring to seal a bearing space.

Foreign substances such as water and mud from the outside may significantly deteriorate durability (wear resistance and bearing life) of the bearing. Therefore, in the sealing device, it is important to secure sealability. In order to secure sealability, wear resistance of a sealing material is required as one of factors. On the other hand, from the viewpoint of energy saving and carbon neutral, low torque is required for sliding of the seal lip.

Conventionally, it has been known that a grease composition having a predetermined composition is enclosed in a hub unit bearing with respect to contamination from the outside. For example, Patent Document 1 describes that water resistance and the like are excellent by containing a base oil, a thickener, three kinds of rust inhibitors, and an antiwear agent.

In order to suppress the sliding resistance of the seal lip to a low level and to secure the sealability of the seal lip, a technique of applying grease to the seal lip or a mating member thereof is known. For example, Patent Document 2 describes a rolling bearing in which grease is applied in advance to a portion that is in sliding contact with a surface of a hub ring during use on one side surface of a tip portion of a seal lip. Patent Document 3 describes a rolling bearing in which grease is applied in advance to a surface of a mating member in sliding contact with a seal lip.

PRIOR ART DOCUMENTS

PATENT DOCUMENT

Patent Document 1: JP 5110843 B2
Patent Document 2: JP 4475055 B2
Patent Document 3: JP 4997532 B2

SUMMARY OF THE INVENTION

PROBLEMS TO BE SOLVED BY THE INVENTION

Conventionally, as in Patent Document 1 described above, various grease compositions have been studied for the grease composition enclosed in the bearing, but almost no consideration is given to grease applied to the seal lip and a mating member thereof. Even when the grease applied to the seal lip and a mating member thereof is examined, the examination is insufficient.

For example, in Patent Document 2 described above, the shape of the seal member (the dimension and the like of the seal lip) is examined to prevent the grease applied to the seal lip from peeling off in advance. Thereby, an increase in frictional resistance and a reduction in sealing failure are achieved. However, the performance related to the frictional resistance and the sealability of the grease itself applied to the seal lip in advance is not considered. Therefore, an increase in frictional resistance or sealing failure may occur due to insufficient performance of the grease. In Patent Document 3 described above, the rotational torque is reduced by defining the kinematic viscosity of the base oil of the grease, but it is considered that it is difficult to achieve both securement of sealability and reduction of the rotational torque only by defining the kinematic viscosity of the base oil.

The present invention has been made in view of the above circumstances, and an object thereof is to provide a sealing device capable of achieving both low torque and high sealability by improving grease applied to a seal lip and a mating member thereof, and a rotating component using the sealing device.

MEANS FOR SOLVING THE PROBLEM

A sealing device of a first embodiment of the present invention is a sealing device being fixed to a fixed-side member of a rotating component and being in sliding contact with a rotating-side member, the sealing device including a seal lip in sliding contact with the rotating-side member, grease being applied to a sliding contact surface of the seal lip, in which the grease contains a base oil, a thickener, and an additive, and an apparent viscosity of the grease at a shear rate of $1000 \text{ s}^{-1}$ at 60°C is 0.22 Pa·s or more.

The additive contains at least one of a sulfur-phosphorus-based extreme pressure agent and a phosphorus-based extreme pressure agent. However, it is preferable that the sulfur-phosphorus-based extreme pressure agent does not contain an organozinc compound or an organomolybdenum compound.

The additive contains calcium sulfonate and other metal sulfonate, and does not contain an ester-based rust inhibitor.

The thickener is a diurea compound obtained by reacting a diisocyanate component and a monoamine component, and the monoamine component is an aliphatic monoamine and an alicyclic monoamine.

The base oil is composed only of a synthetic hydrocarbon oil, or is a mixed oil of the synthetic hydrocarbon oil and an ester oil.

A kinematic viscosity at 40°C of the base oil is 6 $\text{mm}^2$/s to 20 $\text{mm}^2$/s.

The additive contains a sulfur-phosphorus-based extreme pressure agent or a phosphorus-based extreme pressure agent, calcium sulfonate, and other metal sulfonate, and does not contain an ester-based rust inhibitor, the thickener is a diurea compound obtained by reacting a diisocyanate component and a monoamine component, the monoamine component is an aliphatic monoamine and an alicyclic monoamine, and the base oil is composed only of a synthetic hydrocarbon oil, or is a mixed oil of the synthetic hydrocarbon oil and an ester oil, and has a kinematic viscosity at 40°C of 6 $\text{mm}^2$/s to 20 $\text{mm}^2$/s.

In the sealing device, the seal member is formed of nitrile rubber, a first seal lip, a second seal lip, and a third seal lip are included as the seal lip in order from an inner side of the bearing space, and the grease is applied to the sliding contact surfaces of these seal lips.

A rotating component of the present invention uses at least one or more sealing devices of the present invention. The rotating component is a rolling bearing. The rolling bearing is a bearing that rotatably supports an axle.

A sealed rolling bearing of the first embodiment of the present invention is a sealed rolling bearing including a seal member sealing a bearing space, fixed to a fixed-side member, and in sliding contact with a rotating-side member, in which the seal member includes a seal lip in sliding contact with the rotating-side member, and in the sealed rolling bearing, grease is applied to at least one of a sliding contact surface of the seal lip and a sliding contact surface of the rotating-side member in sliding contact with the seal lip, the grease contains a base oil, a thickener, and an additive, and an apparent viscosity of the grease at a shear rate of $1000 \text{ s}^{-1}$ at 60°C is 0.22 Pa·s or more.

A sealing device of a second embodiment of the present invention is a sealing device being fixed to a fixed-side member of a rotating component and being in sliding contact with a rotating-side member, the sealing device including a seal lip in sliding contact with the rotating-side member, grease being applied to a sliding contact surface of the seal lip, in which the grease contains a base oil, a thickener, and an additive containing at least one of a sulfur-phosphorus-based extreme pressure agent and a phosphorus-based extreme pressure agent, and a worked penetration as measured in accordance with JIS K 2220 is more than 220 and less than 260.

The additive further contains calcium sulfonate and other metal sulfonate, and does not contain an ester-based rust inhibitor.

The thickener is a diurea compound obtained by reacting a diisocyanate component and a monoamine component, and the monoamine component is an aliphatic monoamine and an alicyclic monoamine.

The base oil is composed only of a synthetic hydrocarbon oil, or is a mixed oil of the synthetic hydrocarbon oil and an ester oil.

A kinematic viscosity at 40°C of the base oil is 6 $\text{mm}^2$/s to 20 $\text{mm}^2$/s.

The additive further contains calcium sulfonate and other metal sulfonate, and does not contain an ester-based rust inhibitor, the thickener is a diurea compound obtained by reacting a diisocyanate component and a monoamine component, and the monoamine component is an aliphatic monoamine and an alicyclic monoamine, the base oil is composed only of a synthetic hydrocarbon oil, or is a mixed oil of the synthetic hydrocarbon oil and an ester oil, and has a kinematic viscosity at 40°C of 6 $\text{mm}^2$/s to 20 $\text{mm}^2$/s and the worked penetration of 230 or more and 250 or less.

In the sealing device, the seal member is formed of nitrile rubber, a first seal lip, a second seal lip, and a third seal lip are included as the seal lip in order from an inner side of the bearing space, and the grease is applied to the sliding contact surfaces of these seal lips.

A rotating component of the present invention uses at least one or more sealing devices of the present invention. The rotating component is a rolling bearing. The rolling bearing is a bearing that rotatably supports an axle.

A sealed rolling bearing of the second embodiment of the present invention is a sealed rolling bearing including a seal member sealing a bearing space, fixed to a fixed-side member, and in sliding contact with a rotating-side member, in which the seal member includes a seal lip in sliding contact with the rotating-side member, and in the sealed rolling bearing, grease is applied to at least one of a sliding contact surface of the seal lip and a sliding contact surface of the rotating-side member in sliding contact with the seal lip, the grease contains a base oil, a thickener, and an additive containing at least one of a sulfur-phosphorus-based extreme pressure agent and a phosphorus-based extreme pressure agent, and a worked penetration as measured in accordance with JIS K 2220 is more than 220 and less than 260.

EFFECT OF THE INVENTION

In the sealing device of the first embodiment of the present invention, since grease is applied to the sliding contact surface of the seal lip, the grease contains a base oil, a thickener, and an additive, an apparent viscosity of the grease at a shear rate of $1000\ s^{-1}$ at 60°C is $0.22\ Pa \cdot s$ or more, and the grease has fluidity under the shear condition, when the grease is applied to the sliding contact surface of the seal lip, the grease is supplied to a contact portion between the seal lip and the rotating-side member (for example, a slinger), the sealability is maintained, and entry of muddy water can be suitably suppressed. Thereby, a sealing device achieving both low torque and high sealability is obtained.

Since the additive contains at least one of a sulfur-phosphorus-based extreme pressure agent and a phosphorus-based extreme pressure agent, the sealability is more easily improved.

In the sealing device of the second embodiment of the present invention, since grease is applied to the sliding contact surface of the seal lip, the grease contains a base oil, a thickener, and an additive containing at least one of a sulfur-phosphorus-based extreme pressure agent and a phosphorus-based extreme pressure agent, and the worked penetration as measured in accordance with JIS K 2220 is more than 220 and less than 260, when the grease is applied to the sliding contact surface of the seal lip, lubrication of the grease at a contact portion between the seal lip and the rotating-side member (for example, a slinger) is sufficient, and wear can be suppressed. Thereby, a sealing device achieving both low torque and high sealability is obtained.

In the sealing device of each embodiment described above, since the additive contains calcium sulfonate and other metal sulfonate and does not contain an ester-based rust inhibitor, the sealability is more easily improved.

In the sealing device of each embodiment described above, since the thickener is a diurea compound obtained by reacting a diisocyanate component and a monoamine component and the monoamine component is an aliphatic monoamine and an alicyclic monoamine, the thickener further contributes to low torque.

In the sealing device of each embodiment described above, since the base oil is composed only of a synthetic hydrocarbon oil, or is a mixed oil of the synthetic hydrocarbon oil and an ester oil, the base oil further contributes to low torque.

In the sealing device of each embodiment described above, since the kinematic viscosity at 40°C of the base oil is $6\ mm^2/s$ to $20\ mm^2/s$, the base oil further contributes to low torque.

In the sealing device of each embodiment described above, since the seal member is formed of nitrile rubber, a plurality of seal lips are included as the seal lip, and the grease is applied to the sliding contact surfaces of these seal lips, the sealability can be further improved while low torque is secured.

Since the rotating component of the present invention uses at least one or more sealing devices of the present invention, a rotating component achieving both low torque and high sealability is obtained. Since the rotating component is a rolling bearing that rotatably supports an axle, it is possible to contribute to achieving a high function (low fuel consumption) of an axle bearing such as a hub bearing.

In the sealed rolling bearing of the first embodiment of the present invention, since grease is applied to at least one surface of a sliding contact surface of the seal lip and a sliding contact surface of the rotating-side member in sliding contact with the seal lip, the grease contains a base oil, a thickener, and an additive, an apparent viscosity of the grease at a shear rate of $1000\ s^{-1}$ at 60°C is $0.22\ Pa \cdot s$ or more, and the grease has fluidity under the shear condition, when the grease is applied to the sliding contact surface of the seal lip or the sliding contact surface of the rotating-side member, the grease is supplied to a contact portion between the seal lip and the rotating-side member (for example, a slinger), the sealability is maintained, and entry of muddy water can be suitably suppressed. Thereby, a sealed rolling bearing achieving both low torque and high sealability is obtained.

In the sealed rolling bearing of the second embodiment of the present invention, since grease is applied to at least one surface of a sliding contact surface of the seal lip and a sliding contact surface of the rotating-side member in sliding contact with the seal lip, the grease contains a base oil, a thickener, and an additive containing at least one of a sulfur-phosphorus-based extreme pressure agent and a phosphorus-based extreme pressure agent, and the worked penetration as measured in accordance with JIS K 2220 is more than 220 and less than 260, when the grease is applied to the sliding contact surface of the seal lip or the sliding contact surface of the rotating-side member, lubrication of the grease at a contact portion between the seal lip and the rotating-side member (for example, a slinger) is sufficient, and wear can be suppressed. Thereby, a sealed rolling bearing achieving both low torque and high sealability is obtained.

BRIEF DESCRIPTION OF THE DRAWINGS

FIG. 1 is a vertical sectional view illustrating an example of a rotating component of the present invention.
FIG. 2 is an enlarged sectional view illustrating a bearing sealing structure on an inboard side in FIG. 1.
FIG. 3 is an enlarged sectional view illustrating a bearing sealing structure on an outboard side in FIG. 1.
FIG. 4 is a schematic diagram illustrating an example of a rotary rheometer.
FIG. 5 is a vertical sectional view illustrating another example of the rotating component of the present invention.
FIG. 6 is an enlarged sectional view of the rotating component in FIG. 5.

MODE FOR CARRYING OUT THE INVENTION

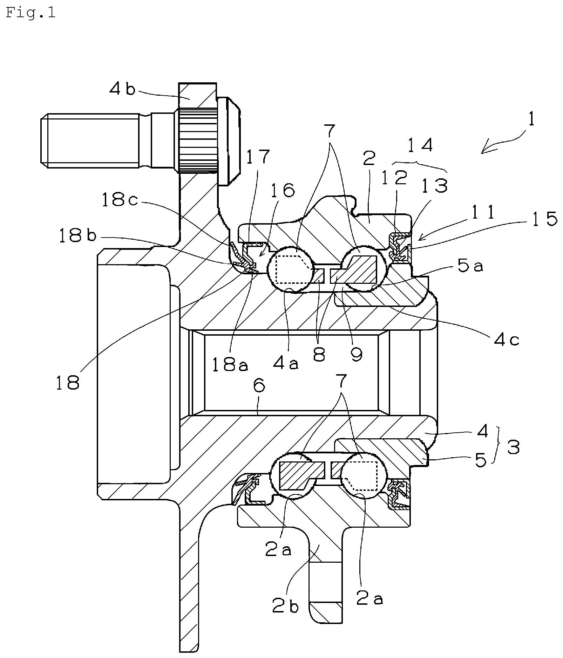

Embodiments of the present invention will be described below with reference to the drawings. FIG. 1 is a vertical sectional view illustrating a hub bearing which is an example of a sealed rolling bearing as a rotating component of the present invention. A hub bearing 1 illustrated in FIG. 1 is an axle bearing on a drive wheel side that rotatably supports an axle.

As illustrated in FIG. 1, the hub bearing 1 includes: an outer member 2 integrally having a vehicle body attachment flange 2b attached to a vehicle body (not illustrated) on an outer periphery and having double-row outer raceway surfaces 2a and 2a formed on an inner periphery; a hub ring 4 integrally having a wheel attachment flange 4b to which a wheel (not illustrated) is attached at one end portion, having one inner raceway surface 4a facing the double-row outer raceway surfaces 2a and 2a and a cylindrical small-diameter step portion 4c axially extending from the inner raceway surface 4a formed on an outer periphery, and having a serration 6 for torque transmission formed on an inner periphery; and an inner ring 5 press-fitted into the small-diameter step portion 4c and having the other inner raceway surface 5a formed on an outer periphery.

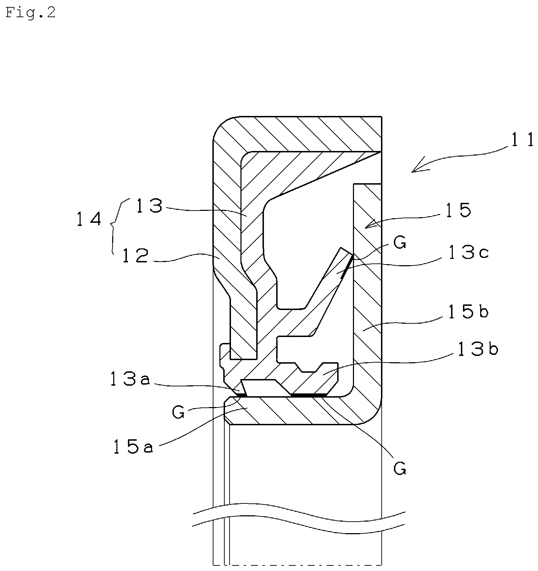

Double-row rolling elements (balls) 7 are rollably accommodated by a retainer 8 between the double-row outer raceway surfaces 2a and 2a and the inner raceway surfaces 4a and 5a facing the outer raceway surfaces. Bearing sealing structures 11 and 16 are constructed in an annular space formed by the hub ring 4 and the inner ring 5 and formed between an inner member 3 serving as the rotating-side member and the outer member 2 serving as the fixed-side member, thereby preventing leakage of the grease composition enclosed in a bearing space 9 and entry of rainwater, dust, or the like into the bearing space 9 from the outside. Of these bearing sealing structures 11 and 16, the bearing sealing structure 11 on the inboard side (right side in the drawing) mounted between the outer member 2 and the inner ring 5 will be described with reference to FIG. 2.

As illustrated in FIG. 2, the bearing sealing structure 11 includes: a seal ring 14 including a core metal 12 internally fitted to the outer member 2 and formed in an L-shaped cross section and a seal member 13 integrally bonded to the core metal 12 by vulcanization; and a slinger 15 externally fitted to the inner ring 5 and similarly formed in an L-shaped cross section. In the bearing sealing structure 11, the seal ring 14 corresponds to the sealing device of the present invention. The slinger 15 and the core metal 12 of the seal ring 14 are formed by press working of an austenitic stainless steel sheet (such as JIS SUS304) or a corrosion-resistant treated cold-rolled steel sheet (such as JIS SPCC).

As the material of the seal member 13, nitrile rubber (NBR), acrylic rubber, silicone rubber, fluororubber, or the like is used. In FIG. 2, the seal member 13 includes three seal lips 13a, 13b, and 13c on an inner side, an intermediate side, and an outer side in order from an inner side of the bearing space, a tip edge of the outer seal lip 13c is brought into sliding contact with an inner surface of a standing plate portion 15b of the slinger 15, and tip edges of the remaining intermediate seal lip 13b and inner seal lip 13a are brought into sliding contact with a cylindrical portion 15a of the slinger 15. In this configuration, the core metal 12 corresponds to the fixed-side member, and the slinger 15 corresponds to the rotating-side member.

In the configuration of FIG. 2, grease is applied to the sliding contact surface of the seal lip of the seal member. Specifically, as illustrated in FIG. 2, grease G is applied to the sliding contact surfaces of the seal lips 13a, 13b, and 13c in sliding contact with the slinger 15. In this case, the grease G only needs to be applied to at least the sliding contact surface of the seal lip, and may be applied to the entire seal lip. Note that the grease G has a composition different from the grease composition enclosed in the bearing space 9 (see FIG. 1).

In the present invention, the grease G (coating grease) contains a base oil, a thickener, and an additive. Hereinafter, this grease will be described.

[First embodiment]

In the first embodiment of the present invention, the grease is characterized in that an apparent viscosity of the grease at a shear rate of 1000 s$^{-1}$ at 60°C is 0.22 Pa·s or more. The present inventors have focused on the apparent viscosity of the coating grease at a shear rate of 1000 s⁻¹ at 60°C assuming the fluidity of the grease in the vicinity of the sliding contact surface. As a result of intensive studies, it has been found that by using the coating grease having an apparent viscosity of 0.22 Pa·s or more, favorable sealability can be obtained in a muddy water resistance test while maintaining low torque properties.

The apparent viscosity in the grease is preferably 0.22 Pa·s or more and 0.30 Pa·s or less and preferably 0.24 Pa·s or more and 0.28 Pa·s or less.

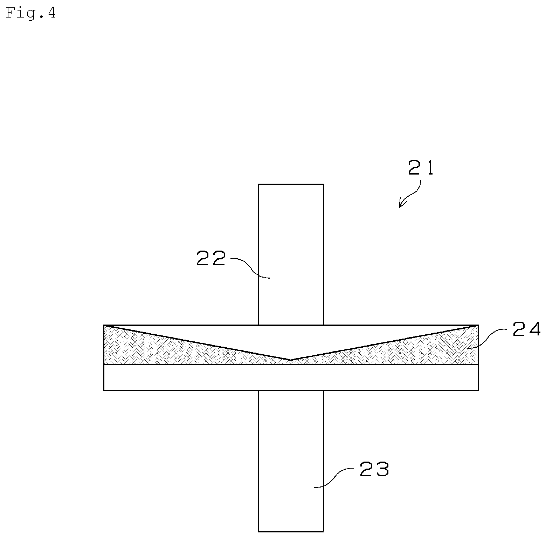

The apparent viscosity of the grease can be calculated using a rheometer. As the rheometer, a rotary rheometer having a cone-plate type cell is preferably used. An outline of such a rheometer is illustrated in FIG. 4. As illustrated in FIG. 4, a rotary rheometer 21 includes a cone-plate type cell 22 and a horizontal disc plate 23, and the cell 22 and the plate 23 are in contact with each other at one point (with a slight gap), and grease 24 as a sample is disposed therebetween. In this rheometer, the shear rate applied to the grease 24 is the same at any position regardless of the distance from the cell center. In the present invention, the shear stress when the shear stress becomes constant (steady) is measured at a temperature of 60°C and a shear rate of 1000 s⁻¹, and the apparent viscosity of the grease is calculated using the shear stress.

For the calculation of the viscosity, for example, the Herschel-Bulkley's equation, which is a general flow equation of a non-Newtonian fluid, is used. The Herschel-Bulkley's equation is represented by the following formula.

[Math. 1]

$$\eta = \frac{\tau_y}{\gamma} + K\gamma^{n-1}$$

$\eta$      : Viscosity [Pa·S]
$\tau_y$      : Yield stress [Pa]
$\gamma$      : Shear rate (1/S)
K, n      : Constant

Note that the yield stress and each constant in the above formula can be specified based on the evaluation of the rheological characteristics of the grease using a rheometer.

The grease may have at least an apparent viscosity of the grease of 0.22 Pa·s or more at a shear rate of 1000 s⁻¹ at 60°C, and a base oil, a thickener, and an additive can be appropriately combined and used.

As the base oil used for the grease, a general base oil usually used in the field of grease can be used. Examples thereof include mineral oils such as a paraffin-based mineral oil and a naphthene-based mineral oil, synthetic hydrocarbon oils (non-polar oil) such as a poly-α-olefin (PAO) oil, an alkylbenzene oil, an alkylnaphthalene oil, a polyphenyl oil, a synthetic naphthenic oil, and a polybutene oil, an ester oil, an ether oil, a silicone oil, and a fluorine oil. These oils may be used singly or in combination of two or more kinds thereof.

Among the above, the base oil is preferably at least one selected from a synthetic hydrocarbon oil and an ester oil, and it is more preferable that the base oil is composed only of a synthetic hydrocarbon oil or is a mixed oil of a synthetic hydrocarbon oil and an ester oil. In the case of the mixed oil, the synthetic hydrocarbon oil is preferably 60 mass% or more, and more preferably 65 mass% to 90 mass% of the entire base oil (mixed oil).

The PAO oil as the synthetic hydrocarbon oil is a mixture of oligomers or polymers of α-olefins or isomerized α-olefins. Specific examples of the α-olefin include 1-octene, 1-nonene, 1-decene, 1-dodecene, 1-tridecene, 1-tetradecene, 1-pentadecene, 1-hexadecene, 1-heptadecene, 1-octadecene, 1-nonadecene, 1-eicosene, 1-docosene, and 1-tetradocosene, and usually, a mixture thereof is used.

Examples of the ester oil include diester oils such as dibutyl sebacate, di-2-ethylhexyl sebacate and dioctyl adipate, aromatic ester oils such as trioctyl trimellitate, tridecyl trimellitate, and tetraoctyl pyromellitate, polyol ester oils such as trimethylolpropane caprylate, trimethylolpropane pelargonate, and pentaerythritol ester oil, carbonate ester oils, and phosphate ester oils. Among them, pentaerythritol ester oil is preferable.

The kinematic viscosity at 40°C of the base oil used for grease (the kinematic viscosity of the mixed oil in the case of the mixed oil, the same applies hereinafter) is, for example, 6 mm²/s to 30 mm²/s, preferably 6 mm²/s to 20 mm²/s, and more preferably 12 mm²/s to 19 mm²/s, and may be 12 mm²/s to 16 mm²/s, from the viewpoint of reducing the torque.

The thickener used for the grease is not particularly limited, and a general thickener usually used in the field of grease can be used. For example, a soap-based thickener such as a metal soap or a composite metal soap, and a non-soap-based thickener such as bentonite, silica gel, a diurea compound, a triurea compound, a tetraurea compound, or a urea urethane compound can be used. Examples of the metal soap include sodium soap, calcium soap, and lithium soap, and examples of the composite metal soap include composite lithium soap. Among them, a diurea compound is preferably used.

The diurea compound is obtained by reacting a diisocyanate component and a monoamine component. Examples of the diisocyanate component include phenylene diisocyanate, tolylene diisocyanate, diphenyl diisocyanate, diphenylmethane diisocyanate, octadecane diisocyanate, decane diisocyanate, and hexane diisocyanate. As the monoamine component, an aliphatic monoamine, an alicyclic monoamine, or an aromatic monoamine can be used. Examples of the aliphatic monoamine include hexylamine, octylamine, dodecylamine, hexadecylamine, octadecylamine, stearylamine, and oleylamine. Examples of the alicyclic monoamine include cyclohexylamine. Examples of the aromatic monoamine include aniline and p-toluidine.

Among these diurea compounds, an aromatic diisocyanate is preferably used as the diisocyanate component, and at least one of an aliphatic monoamine and an alicyclic monoamine is used as the monoamine component, because of its more excellent low torque properties. In particular, it is more preferable to use, as the thickener, an aliphatic/alicyclic diurea compound produced by using an aromatic diisocyanate as the diisocyanate component and using an aliphatic monoamine and an alicyclic monoamine as the monoamine component. The ratio of the aliphatic monoamine and the alicyclic monoamine to be used for the production of the aliphatic/alicyclic diurea compound is not particularly limited, and in terms of molar ratio, for example, aliphatic monoamine : alicyclic monoamine = (3 : 1) to (1 : 3), and the molar ratio is preferably (2 : 1) to (1 : 2). The number of moles of the aliphatic monoamine may be larger than the number of moles of the alicyclic monoamine.

The base grease containing a diurea compound as a thickener is produced by reacting the diisocyanate component and the monoamine component in a base oil.

In the grease, the thickener is contained in an amount of preferably 10 mass% to 30 mass%, more preferably 10 mass% to 20 mass%, and still more preferably 12 mass% to 18 mass% with respect to the total amount (100 mass%) of the base oil and the thickener. By relatively reducing the amount of the thickener, the proportion of the base oil can be increased accordingly, and it is easy to reduce the torque.

The additive used for the grease is not particularly limited, and a known additive can be used, but from the viewpoint of easily setting the viscosity characteristics to a desired range and improving the sealability, the additive preferably contains an extreme pressure agent and further a rust inhibitor.

The extreme pressure agent preferably contains at least one extreme pressure agent of a sulfur-phosphorus-based extreme pressure agent and a phosphorus-based extreme pressure agent. The sulfur-phosphorus-based extreme pressure agent contains a sulfur atom and a phosphorus atom, and examples thereof include thiophosphate, thiophosphite, zinc dialkyldithiophosphate (ZnDTP), and molybdenum dialkyldithiophosphate (MoDTP), and thiophosphate and thiophosphite are preferable. The phosphorus-based extreme pressure agent contains a phosphorus atom (excluding a sulfur-phosphorus-based extreme pressure agent), and examples thereof include phosphoric acid esters such as trialkyl phosphate, tricresyl phosphate, and triphenyl phosphate, acidic phosphoric acid esters, phosphorous acid esters such as tricresyl phosphite and triphenyl phosphite, and acidic phosphorous acid esters.

The content of the extreme pressure agent is, for example, 0.5 mass% or more and less than 3.0 mass%, and preferably 0.5 mass% or more and less than 1.5 mass% with respect to the total amount (100 mass%) of the grease.

As the rust inhibitor, a sulfonate-based rust inhibitor; ester-based rust inhibitor such as sorbitan fatty acid ester; a linear fatty acid such as lauric acid and stearic acid, a carboxylic acid-based rust inhibitor such as succinic acid and alkyl succinic acid; a carboxylate-based rust inhibitor such as each metal salt (cobalt, manganese, zinc) of fatty acid, naphthenic acid, and the like; an amine-based rust inhibitor such as alkoxyphenylamine; and the like can be used. Among them, at least a sulfonate-based rust inhibitor is preferably used as the rust inhibitor.

As the sulfonate-based rust inhibitor, various metal salts and amine salts of alkyl aromatic sulfonic acids such as alkylbenzenesulfonic acid and alkylnaphthalenesulfonic acid, and petroleum-based sulfonic acids obtained by sulfonating aromatic components of petroleum fractions can be used. Examples of the metal constituting the metal salt include alkaline earth metals such as barium, calcium, and magnesium, alkali metals such as sodium, potassium, and lithium, and zinc. Examples of the amine constituting the amine salt include ethylamine and trimethylamine. These sulfonate-based rust inhibitors may be used singly or as a mixture of two or more kinds thereof. Note that the sulfonate-based rust inhibitor may be a neutral sulfonate or a basic sulfonate.

In particular, it is preferable to use two kinds of sulfonate-based rust inhibitors in combination as the rust inhibitor. By combining two kinds of sulfonate-based rust inhibitors, it becomes easier to set the viscosity characteristics to a desired range and the rust prevention property can also be improved as compared with the case of using one kind singly. Specifically, calcium sulfonate is combined with other metal sulfonates. In this case, the ester-based rust inhibitor may not be contained. Examples of the ester-based rust inhibitor include partial esters of polyhydric alcohols such as sorbitan, sorbitol, pentaerythritol, sucrose, and glycerin with carboxylic acids such as oleic acid and lauric acid, and succinic acid half esters.

The content of the rust inhibitor (the total amount when two or more kinds are contained) is, for example, 0.5 mass% or more and less than 3.0 mass%, and preferably 0.5 mass% or more and less than 1.5 mass% with respect to the total amount of the grease.

The additive may contain an antioxidant. Examples of the antioxidant include amine-based antioxidants such as phenyl-1-naphthylamine, phenyl-2-naphthylamine, diphenyl-p-phenylenediamine, dipyridylamine, phenothiazine, N-methylphenothiazine, N-ethylphenothiazine, 3,7-dioctylphenothiazine, p,p'-dioctyldiphenylamine, and N,N'-diisopropyl-p-phenylenediamine, and phenol-based antioxidants such as 2,2'-methylenebis(6-tert-butyl-4-methylphenol). These antioxidants may be used singly or in combination of two or more kinds thereof. It is preferable to use an amine-based antioxidant as the antioxidant.

The content of the antioxidant is, for example, 0.5 mass% or more and less than 3.0 mass%, and preferably 0.5 mass% or more and less than 1.5 mass% with respect to the total amount of the grease.

Known additives other than the above-described extreme pressure agent, rust inhibitor, and antioxidant can be added to the grease. Note that it is preferable not to contain an organozinc compound such as ZnDTP or an organomolybdenum compound such as MoDTP.

The worked penetration (JIS K 2220) of the grease used in the present invention is, for example, in a range of 220 or more and 300 or less, preferably in a range of more than 220 and less than 260, and more preferably in a range of 230 or more and 250 or less.

A particularly preferred form of the grease of the first embodiment contains a base oil, a thickener, and an additive, the apparent viscosity of the grease at a shear rate of 1000 s$^{-1}$ at 60°C is 0.22 Pa·s or more, the grease contains, as the additive, a sulfur-phosphorus-based extreme pressure agent or a phosphorus-based extreme pressure agent, calcium sulfonate, and other metal sulfonate, and does not contain an ester-based rust inhibitor, the thickener is a diurea compound obtained by reacting a diisocyanate component and a monoamine component, the monoamine component is an aliphatic monoamine and an alicyclic monoamine, and the base oil is composed only of a synthetic hydrocarbon oil, or is a mixed oil of the synthetic hydrocarbon oil and an ester oil, and has a kinematic viscosity at 40°C of 6 mm$^2$/s to 20 mm$^2$/s. The above-described numerical range and each configuration can be further combined with the grease of this embodiment.

[Second embodiment]

In the second embodiment of the present invention, the grease G (coating grease) contains a base oil, a thickener, and a predetermined additive, and has a worked penetration of more than 220 and less than 260. When the worked penetration of the grease is in the above range, lubrication of the grease at a contact portion between the seal lip and the rotating-side member (for example, a slinger) is sufficient, wear of the seal lip can be suppressed, and eventually, the sealability is maintained. The worked penetration of the grease is preferably in a range of 230 or more and 250 or less.

The grease may have at least a worked penetration of more than 220 and less than 260, and can be used by appropriately combining a base oil, a thickener, and an additive.

Note that the configuration described in the first embodiment can be appropriately adopted for the type of the base oil, the kinematic viscosity at 40°C of the base oil, the type of the thickener, and the content (mass%) of the thickener with respect to the total amount of the base oil and the thickener.

The grease of the second embodiment contains, as an additive, at least one extreme pressure agent of a sulfur-phosphorus-based extreme pressure agent and a phosphorus-based extreme pressure agent. Thereby, the wear resistance is easy to be further improved.

The sulfur-phosphorus-based extreme pressure agent contains a sulfur atom and a phosphorus atom, and examples thereof include thiophosphate, thiophosphite, zinc dialkyldithiophosphate (ZnDTP), and molybdenum dialkyldithiophosphate (MoDTP). However, it is preferable that the sulfur-phosphorus-based extreme pressure agent does not contain an organozinc compound or an organomolybdenum compound, and it is more preferable to use thiophosphate or thiophosphite as the sulfur-phosphorus-based extreme pressure agent. The phosphorus-based extreme pressure agent contains a phosphorus atom (excluding a sulfur-phosphorus-based extreme pressure agent), and examples thereof include phosphoric acid esters such as trialkyl phosphate, tricresyl phosphate, and triphenyl phosphate, acidic phosphoric acid esters, phosphorous acid esters such as tricresyl phosphite and triphenyl phosphite, and acidic phosphorous acid esters.

The content of the extreme pressure agent is, for example, 0.5 mass% or more and less than 3.0 mass%, and preferably 0.5 mass% or more and less than 1.5 mass% with respect to the total amount (100 mass%) of the grease.

The additive may further contain a known additive, and preferably contains a rust inhibitor from the viewpoint of easily setting the worked penetration to a desired range and improving wear resistance.

As the rust inhibitor, those described in the first embodiment can be used. In particular, it is preferable to use two kinds of sulfonate-based rust inhibitors in combination as the rust inhibitor. By combining two kinds of sulfonate-based rust inhibitors, it becomes easier to set the worked penetration to a desired range and the rust prevention property can also be improved as compared with the case of using one kind singly. Specifically, calcium sulfonate is combined with other metal sulfonates. In this case, the ester-based rust inhibitor may not be contained. Examples of the ester-based rust inhibitor include partial esters of polyhydric alcohols such as sorbitan, sorbitol, pentaerythritol, sucrose, and glycerin with carboxylic acids such as oleic acid and lauric acid, and succinic acid half esters.

The content of the rust inhibitor (the total amount when two or more kinds are contained) is, for example, 0.5 mass% or more and less than 3.0 mass%, and preferably 0.5 mass% or more and less than 1.5 mass% with respect to the total amount of the grease.

The additive may contain an antioxidant. The configuration described in the first embodiment can be appropriately adopted for the type of the antioxidant and the content thereof.

Known additives other than the above-described extreme pressure agent, rust inhibitor, and antioxidant can be added to the grease. Note that it is preferable not to contain an organozinc compound such as ZnDTP or an organomolybdenum compound such as MoDTP.

A particularly preferred form of the grease of the second embodiment contains a base oil, a thickener, and an additive containing at least one of a sulfur-phosphorus-based extreme pressure agent and a phosphorus-based extreme pressure agent, has a worked penetration as measured in accordance with JIS K 2220 of 230 or more and 250 or less, further contains, as the additive, calcium sulfonate and other metal sulfonate, and does not contain an ester-based rust inhibitor, the thickener is a diurea compound obtained by reacting a diisocyanate component and a monoamine component, the monoamine component is an aliphatic monoamine and an alicyclic monoamine, and the base oil is composed only of a synthetic hydrocarbon oil, or is a mixed oil of the synthetic hydrocarbon oil and an ester oil, and has a kinematic viscosity at 40°C of 6 $mm^2$/s to 20 $mm^2$/s. The above-described numerical range and each configuration can be further combined with the grease of this embodiment.

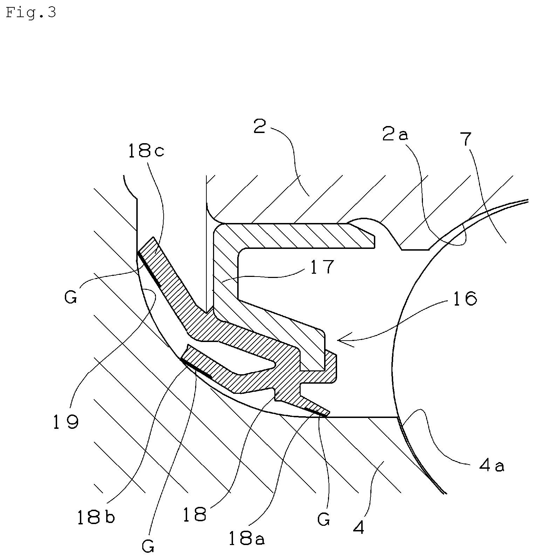

Next, the bearing sealing structure 16 will be described with reference to FIG. 3. The bearing sealing structure 16 includes: a core metal 17 internally fitted to the outer member 2 and formed in an annular shape; and a seal member 18 integrally bonded to the core metal 17 by vulcanization. The bearing sealing structure 16 corresponds to the sealing device of the present invention. The core metal 17 is formed in the same manner as the above-described slinger and the like. The seal member 18 is made of an elastic member such as nitrile rubber, and includes two side lips (dust seals) 18b and 18c and a single radial lip (grease seal) 18a, and each tip edge thereof is brought into direct sliding contact with the surface of the hub ring 4, specifically, a sliding contact surface 19 formed in an arc shape of the inboard-side base portion of the wheel attachment flange 4b.

As illustrated in FIG. 3, also in the bearing sealing structure 16, the grease G is applied to the surfaces of the seal lips 18a, 18b, and 18c in sliding contact with the hub ring 4, specifically, one side surface of the tip portion of each seal lip. Thereby, both securement of sealability and reduction in rotational torque are achieved.

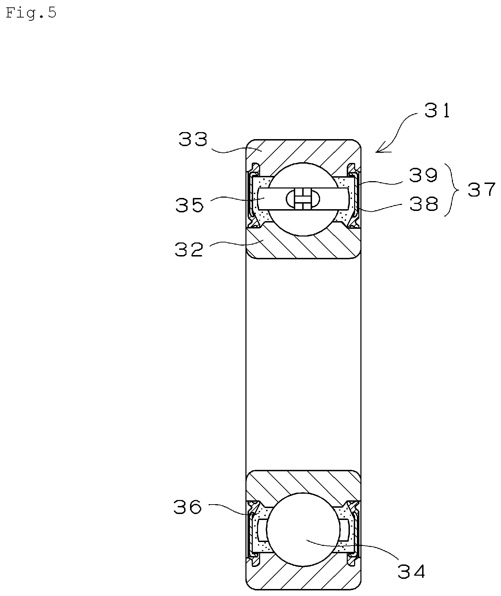

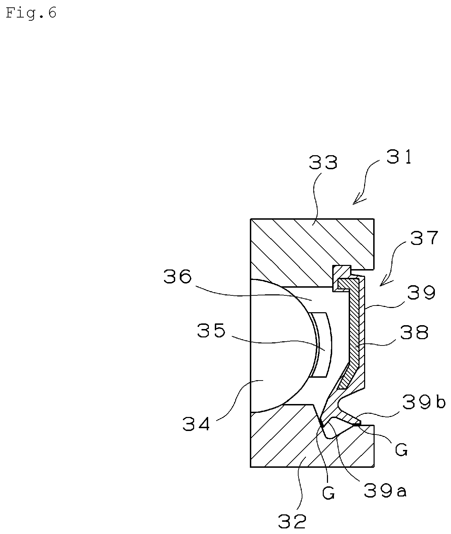

FIG. 5 is a vertical sectional view illustrating a deep groove ball bearing which is another example of the sealed rolling bearing as the rotating component of the present invention, and FIG. 6 is a partially enlarged view thereof. A rolling bearing 31 includes: an inner ring 32 having an inner ring raceway surface on an outer peripheral surface; an outer ring 33 having an outer ring raceway surface on an inner peripheral surface; and a plurality of rolling elements 34 disposed between the inner ring raceway surface and the outer ring raceway surface. The inner ring and the outer ring are disposed coaxially to each other.

The rolling elements 34 are held by a retainer 35. Sealing devices 37 are mounted to both openings in axial directions of the inner and outer rings, and a grease composition 36 is enclosed at least around the rolling elements 34. The inner ring 32, the outer ring 33, and the rolling elements 34 are made of an iron-based metal material, and the grease composition 36 is interposed and lubricated on the raceway surface with the rolling elements 34.

As illustrated in FIG. 6, the sealing device 37 includes a disc-shaped core metal 38 formed by press working of a cold-rolled steel sheet or the like, and a seal member 39 integrally bonded to the core metal 38 by vulcanization. The seal member 39 includes, at an end portion on the inner ring 32 side, a main lip 39a formed by bifurcating the tip, and a dust lip 39b located on the outer side of the bearing space with respect to the main lip 39a. A part of the seal member 39 is fixed to a seal groove on the inner periphery of the end portion of the outer ring 33, which is a fixed-side member, and each seal lip is in sliding contact with a seal groove having a substantially U-shaped cross section formed on the outer periphery of the end portion of the inner ring 32, which is a rotating-side member. As illustrated in FIG. 6, also in the sealing device 37, the grease G is applied to the surfaces of the seal lips 39a and 39b in sliding contact with the inner ring 32, specifically, one side surface of the tip portion of each seal lip. Note that the grease G has a composition different from the grease composition 36 enclosed in the bearing space.

In the examples of FIGS. 5 to 6, the deep groove ball bearing is exemplified as the sealed rolling bearing, but the sealing device of the present invention can also be used for a cylindrical roller bearing, a tapered roller bearing, a self-aligning roller bearing, a needle roller bearing, a thrust cylindrical roller bearing, a thrust tapered roller bearing, a thrust needle roller bearing, a thrust self-aligning roller bearing, or the like other than the above.

Note that, in the sealed rolling bearings in FIGS. 1 to 3 and FIGS. 5 to 6 described above, the grease used in the present invention is applied to the sliding contact surface of the seal lip of the seal member in advance. Alternatively or additionally, the grease may be applied to the surface of the rotating-side member in sliding contact with the seal lip in advance.

The use application of the sealed rolling bearing is not particularly limited, but the sealed rolling bearing is particularly suitable for use applications of low-speed rotation. The sealed rolling bearing is applied to, for example, a bearing used in a rotation speed range of 2000 min$^{-1}$ or less. Here, the fact that the bearing is used in a rotation speed range of 2000 min$^{-1}$ or less means that a main rotation speed (rotation speed in a steady state) in a use state of the bearing is 2000 min$^{-1}$ or less. The rotation speed may be 1500 min$^{-1}$ or less or 1000 min$^{-1}$ or less.

The rotating component of the present invention is not limited to the rolling bearing, and any rotating component may be used as long as it uses a sealing device required to have sealability.

EXAMPLES

First, greases having compositions shown in Tables 1 and 2 were produced. Note that the following 1) to 9) in Table 1 are the same in Table 2.

The grease used in each test example was prepared as follows.

First, an oil phase A obtained by mixing isocyanate (4,4'-diphenylmethane diisocyanate, MDI) and half of a base oil at 60°C, and an oil phase B obtained by mixing amine and half of a base oil at a predetermined temperature (from room temperature to 60°C) were prepared. Subsequently, the oil phase B was added and mixed while stirring the oil phase A, and the mixture was heated at 100°C for 30 minutes (urea reaction). Note that the completion of the reaction was confirmed by IR (infrared spectrometer) or the like. Thereafter, the mixture was heated at 130°C for 1 hour (reaction stabilization) and slowly cooled to room temperature. Then, a homogenization treatment was performed, and the grease was smoothed by a three-roll mill.

Using the obtained grease, the following physical properties were measured and tested.

<Worked penetration>

The worked penetration after 60 strokes of the grease was measured in accordance with JIS K2220.

<Apparent viscosity of grease>

Using a cone-plate type (diameter: 20 mm, cone angle: 1°) rheometer, measurement was performed for each grease at a temperature of 60°C and a shear rate of 1000 s$^{-1}$ for 30 minutes, and the average value for 1 minute before the end was taken as the apparent viscosity of the grease. In this test, the case of 0.22 Pa·s or more was marked with O, and the case of less than 0.22 Pa·s was marked with X, which were also shown in Tables 1 to 2.

<Seal torque test>

Grease was applied to one side surface of the tip portion of three seal lips of a nitrile rubber seal member (φ60 to 70 mm). The seal member was attached to a member simulating a hub outer ring, a slinger made of SUS430 was attached to a member simulating a hub inner ring, and the seal lip and the slinger were assembled so as to be in contact with each other. After 30 minutes from the start of the test, the torque (N·m) due to the sliding contact of the seal lip was measured for 1 minute under the conditions of a rotation speed of 600 min$^{-1}$, a room temperature atmosphere, and inner ring rotation. In this test, the case of less than 0.20 N·m was marked with O, and the case of 0.20 N·m or more was marked with X, which were also shown in Tables 1 to 2.

<Muddy water resistance test>

Grease was applied to one side surface of the tip portion of three seal lips of a nitrile rubber seal member (φ60 to 70 mm). The seal member was attached to a member simulating a hub outer ring, a slinger made of SUS430 was attached to a member simulating a hub inner ring, and the seal lip and the slinger were assembled so as to be in contact with each other. A chamber was attached to outer surface side of the slinger, muddy water was poured into the chamber, and the slinger was installed so that the assembled seal and the slinger were immersed in the muddy water up to the lower half. A test was conducted in an operation pattern in which an operation for 20 hours and a stop for 4 hours were set as one cycle under the conditions of a rotation speed of 1100 min$^{-1}$, a room temperature atmosphere, and inner ring rotation, and the number of cycles until muddy water entered the inside was defined as a life. In this test, the case of 25 cycles or more was marked with O, and the case of less than 25 cycles was marked with X, which were also shown in Tables 1 to 2.

<Wear test>

Grease was applied to a nitrile rubber pin (diameter: φ3 mm) and a SUJ2 disc, the nitrile rubber pin was pressed against the SUJ2 disc (surface pressure: 0.83 MPa), muddy water was poured, and a test was performed at a rotation speed of 100 min$^{-1}$ and 80°C for 30 minutes in a disc-side rotation to measure the wear amount of the nitrile rubber pin. In this test, a case where the wear amount was less than 60 μm was marked as O, and a case where the wear amount was 60 μm or more was marked as X, which were also shown in Tables 1 to 2.

[Table 1]

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Base oil mass% | Synthetic hydro-carbon oil[1] | 13.7 | 13.7 | 13.2 | 13.2 | 12.5 | 12.5 | 12.3 | 12.3 | - | - | - | - |
| | Synthetic hydro-carbon oil[2] | 66.8 | 66.8 | 60.1 | 60.1 | 53.5 | 53.5 | 46.2 | 46.2 | 80.5 | 80.5 | 67.6 | 67.6 |
| | Ester oil[3] | - | - | 8.2 | 8.2 | 16.5 | 16.5 | 25.1 | 25.1 | - | - | 16.9 | 16.9 |
| Thickener mass% | Amine: stearylamine | 10.3 | 10.3 | 9.7 | 9.7 | 9.1 | 9.1 | 8.5 | 8.5 | 10.3 | 10.3 | 7.9 | 7.9 |
| | Amine: cyclohexylamine | 1.9 | 1.9 | 1.8 | 1.8 | 1.7 | 1.7 | 1.6 | 1.6 | 1.9 | 1.9 | 1.5 | 1.5 |
| | Diisocyanate: MDI | 4.8 | 4.8 | 4.5 | 4.5 | 4.2 | 4.2 | 3.9 | 3.9 | 4.8 | 4.8 | 3.7 | 3.7 |
| Rust inhibitor parts by mass | Thiophosphate ester[4] | 1.0 | - | 1.0 | - | 1.0 | - | 1.0 | - | 1.0 | - | 1.0 | - |
| | Trioctyl phos-phate[5] | - | 1.0 | - | 1.0 | - | 1.0 | - | 1.0 | - | 1.0 | - | 1.0 |
| | Sorbitan mono-oleate[6] | - | - | - | - | - | - | - | - | - | - | - | - |
| | Ca sulfonate[7] | 0.5 | 0.5 | 0.5 | 0.5 | 0.5 | 0.5 | 0.5 | 0.5 | 0.5 | 0.5 | 0.5 | 0.5 |
| | Ba sulfonate[8] | 0.5 | 0.5 | 0.5 | 0.5 | 0.5 | 0.5 | 0.5 | 0.5 | 0.5 | 0.5 | 0.5 | 0.5 |
| | Octylated diphe-nylamine[9] | 0.5 | 0.5 | 0.5 | 0.5 | 0.5 | 0.5 | 0.5 | 0.5 | 0.5 | 0.5 | 0.5 | 0.5 |
| Kinematic viscosity of base oil at 40°C, mm$^2$/s | | 14 | 14 | 14 | 14 | 14 | 14 | 14 | 14 | 17 | 17 | 17 | 17 |
| Worked penetration (60 times) | | 240 | 250 | 240 | 240 | 240 | 250 | 230 | 240 | 230 | 240 | 230 | 240 |
| Apparent viscosity of grease, Pa·s | | O | O | O | O | O | O | O | O | O | O | O | O |
| Seal torque test, N·m | | O | O | O | O | O | O | O | O | O | O | O | O |
| Muddy water resistance test | | O | O | O | O | O | O | O | O | O | O | O | O |
| Wear test, μm | | O | O | O | O | O | O | O | O | O | O | O | O |

1) Kinematic viscosity at 40°C: 5 mm$^2$/s (PAO201 manufactured by NIPPON STEEL Chemical & Material CO., LTD.)
2) Kinematic viscosity at 40°C: 17 mm$^2$/s (PAO401 manufactured by NIPPON STEEL Chemical & Material CO., LTD.)
3) Kinematic viscosity at 40°C: 16 mm$^2$/s (KAOLUBE 162 manufactured by Kao Corporation)
4) Irgalube 232 manufactured by BASF
5) manufactured by Tokyo Chemical Industry Co., Ltd.
6) manufactured by Fujifilm Wako Pure Chemical Industries, Ltd.
7) SULFOL Ca-45N manufactured by MORESCO Corporation
8) NA-SUL BSN manufactured by King Industries, Inc.
9) Nocrac AD-F manufactured by OUCHI SHINKO CHEMICAL INDUSTRIAL CO., LTD.

[Table 2]

| | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Base oil mass% | Synthetic hydro-carbon oil[1] | 13.8 | 13.9 | 13.3 | 13.4 | 12.6 | 12.8 | 13.6 | 13.6 | 12.5 | 12.5 | 12.7 | 12.7 |
| | Synthetic hydro-carbon oil[2] | 67.2 | 68.1 | 60.5 | 61.3 | 53.8 | 54.4 | 66.4 | 66.4 | 53.1 | 53.1 | 54.1 | 54.1 |
| | Ester oil[3] | - | - | 8.2 | 8.3 | 16.6 | 16.8 | - | - | 16.4 | 16.4 | 16.7 | 16.7 |
| Thickener mass% | Amine: stearylamine | 10.3 | 10.3 | 9.7 | 9.7 | 9.1 | 9.1 | 10.9 | 10.9 | 9.7 | 9.7 | 9.1 | 9.1 |
| | Amine: cyclohexylamine | 1.9 | 1.9 | 1.8 | 1.8 | 1.7 | 1.7 | 2.0 | 2.0 | 1.8 | 1.8 | 1.7 | 1.7 |
| | Diisocyanate: MDI | 4.8 | 4.8 | 4.5 | 4.5 | 4.2 | 4.2 | 5.1 | 5.1 | 4.5 | 4.5 | 4.2 | 4.2 |
| Rust inhibitor parts by mass | Thiophosphate ester[4] | - | - | - | - | - | - | 1.0 | - | 1.0 | - | 1.0 | - |
| | Trioctyl phos-phate[5] | - | - | - | - | - | - | - | 1.0 | - | 1.0 | - | 1.0 |
| | Sorbitan mono-oleate[6] | 1.0 | - | 1.0 | - | 1.0 | - | - | - | - | - | - | - |
| | Ca sulfonate[7] | - | - | - | - | - | - | - | - | - | - | - | - |
| | Ba sulfonate[8] | 0.5 | 0.5 | 0.5 | 0.5 | 0.5 | 0.5 | 0.5 | 0.5 | 0.5 | 0.5 | - | - |
| | Octylated diphe-nylamine[9] | 0.5 | 0.5 | 0.5 | 0.5 | 0.5 | 0.5 | 0.5 | 0.5 | 0.5 | 0.5 | 0.5 | 0.5 |
| Kinematic viscosity of base oil at 40°C, $mm^2/s$ | | 14 | 14 | 14 | 14 | 14 | 14 | 14 | 14 | 14 | 14 | 14 | 14 |
| Worked penetration (60 times) | | 270 | 260 | 280 | 260 | 270 | 260 | 210 | 220 | 220 | 220 | 260 | 260 |
| Apparent viscosity of grease, Pa·s | | × | × | × | × | × | × | × | × | × | × | × | × |
| Seal torque test, N·m | | ○ | ○ | ○ | ○ | ○ | ○ | ○ | ○ | ○ | ○ | ○ | ○ |
| Muddy water resistance test | | × | × | × | × | × | × | × | × | × | × | × | × |
| Wear test, μm | | × | × | × | × | × | × | × | × | × | × | × | × |

As shown in Table 1, in Examples 1 to 12 in which the apparent viscosity of the grease at a shear rate of 1000 s$^{-1}$ at 60°C was 0.22 Pa·s or more, both the seal torque test and the muddy water resistance test were acceptable. On the other hand, in Comparative Examples 1 to 12, the seal torque test was acceptable, but the apparent viscosity of the grease at a shear rate of 1000 s$^{-1}$ at 60°C was less than 0.22 Pa·s, and the muddy water resistance test was unacceptable.

As described above, since the grease of the first embodiment in which the apparent viscosity of the grease at a shear rate of 1000 s$^{-1}$ at 60°C is 0.22 Pa·s or more has fluidity under the shear condition, the grease is supplied to the contact portion between the seal lip and the slinger. As a result, it is considered that the sealability is maintained and the entry of muddy water is suppressed.

As shown in Table 1, in Examples 1 to 12 in which the range of the worked penetration was more than 220 and less than 260 (specifically, 230 or more and 250 or less), both the seal torque test and the wear test were acceptable. On the other hand, in Comparative Examples 1 to 12 in which the worked penetration was 220 or less or 260 or more, the seal torque test was acceptable, but the wear test was unacceptable.

As described above, it is considered that when the range of the worked penetration of the coating grease is more than 220 and less than 260, lubrication at the contact portion between the seal lip and the slinger or the like is sufficient, and wear is suppressed; on the other hand, when the worked penetration is 220 or less and the grease is hard or when the worked penetration is 260 or more and the grease is soft, lubrication at the contact portion between the seal lip and the slinger or the like is insufficient, and wear is likely to increase.

INDUSTRIAL APPLICABILITY

Since the sealing device of the present invention can achieve both low torque properties and high sealability, the sealing device can be widely used for a rotating component, for example, a sealed rolling bearing, and can be suitably used for a hub bearing or the like into which muddy water or the like easily enters.

REFERENCE SIGNS LIST

| 1 | Hub bearing (rotating component) |
|---|---|
| 2 | Outer member |
| 3 | Inner member |
| 4 | Hub ring |
| 5 | Inner ring |
| 6 | Serration |
| 7 | Rolling element |
| 8 | Retainer |
| 9 | Bearing space |
| 11 | Bearing sealing structure |
| 12 | Core metal |
| 13 | Seal member |
| 14 | Seal ring (sealing device) |
| 15 | Slinger |
| 16 | Bearing sealing structure (sealing device) |
| 17 | Core metal |
| 18 | Seal member |
| 19 | Sliding contact surface |
| 21 | Rheometer |
| 22 | Cone-plate type cell |
| 23 | Horizontal disc plate |
| 24 | Grease |
| 31 | Rolling bearing (rotating component) |
| 32 | Inner ring |
| 33 | Outer ring |
| 34 | Rolling element |
| 35 | Retainer |
| 36 | Grease composition |
| 37 | Sealing device |
| 38 | Core metal |
| 39 | Seal member |
| G | Grease |

**Claims**

1. A sealing device being fixed to a fixed-side member of a rotating component and being in sliding contact with a rotating-side member, the sealing device comprising a seal lip in sliding contact with the rotating-side member, grease being applied to a sliding contact surface of the seal lip, wherein
the grease contains a base oil, a thickener, and an additive, and an apparent viscosity of the grease at a shear rate of 1000 s$^{-1}$ at 60°C is 0.22 Pa·s or more.

2. The sealing device according to claim 1, wherein the additive contains at least one of a sulfur-phosphorus-based extreme pressure agent and a phosphorus-based extreme pressure agent.

3. The sealing device according to claim 1, wherein the additive contains calcium sulfonate and other metal sulfonate, and does not contain an ester-based rust inhibitor.

4. The sealing device according to claim 1, wherein the thickener is a diurea compound obtained by reacting a diisocyanate component and a monoamine component, and the monoamine component is an aliphatic monoamine and an alicyclic monoamine.

5. The sealing device according to claim 1, wherein the base oil is composed only of a synthetic hydrocarbon oil, or is a mixed oil of the synthetic hydrocarbon oil and an ester oil.

6. The sealing device according to claim 1, wherein a kinematic viscosity at 40°C of the base oil is 6 mm$^2$/s to 20 mm$^2$/s.

7. The sealing device according to claim 1, wherein the additive contains a sulfur-phosphorus-based extreme pressure agent or a phosphorus-based extreme pressure agent, calcium sulfonate, and other metal sulfonate, and does not contain an ester-based rust inhibitor,

the thickener is a diurea compound obtained by reacting a diisocyanate component and a monoamine component, and the monoamine component is an aliphatic monoamine and an alicyclic monoamine, and
the base oil is composed only of a synthetic hydrocarbon oil, or is a mixed oil of the synthetic hydrocarbon oil and an ester oil, and has a kinematic viscosity at 40°C of 6 mm$^2$/s to 20 mm$^2$/s.

8. The sealing device according to claim 1, wherein the additive contains at least one of a sulfur-phosphorus-based extreme pressure agent and a phosphorus-based extreme pressure agent, and a worked penetration of the grease as measured in accordance with JIS K 2220 is more than 220 and less than 260.

9. The sealing device according to claim 8, wherein the additive further contains calcium sulfonate and other metal sulfonate, and does not contain an ester-based rust inhibitor,

the thickener is a diurea compound obtained by reacting a diisocyanate component and a monoamine component, and the monoamine component is an aliphatic monoamine and an alicyclic monoamine, and
the base oil is composed only of a synthetic hydrocarbon oil, or is a mixed oil of the synthetic hydrocarbon oil and an ester oil, and has a kinematic viscosity at 40°C of 6 mm$^2$/s to 20 mm$^2$/s and the worked penetration of 230 or more and 250 or less.

10. The sealing device according to claim 1, wherein in the sealing device, a seal member is formed of nitrile rubber, a first seal lip, a second seal lip, and a third seal lip are included as the seal lip in order from an inner side of a bearing space, and the grease is applied to the sliding contact surfaces of these seal lips.

11. A rotating component using at least one or more sealing devices according to claim 1.

12. The rotating component according to claim 11, wherein the rotating component is a rolling bearing.

13. The rotating component according to claim 12, wherein the rolling bearing is a bearing that rotatably supports an axle.

Fig.1

Fig.2

Fig.3

Fig.4

Fig.5

Fig.6

## INTERNATIONAL SEARCH REPORT

| | |
|---|---|
| International application No. | |
| **PCT/JP2024/030112** | |

**A.    CLASSIFICATION OF SUBJECT MATTER**

*F16C 33/78*(2006.01)i; *C10M 107/02*(2006.01)i; *C10M 115/08*(2006.01)i; *C10M 129/68*(2006.01)i; *C10M 135/10*(2006.01)i; *C10M 159/24*(2006.01)i; *C10M 171/00*(2006.01)i; *C10M 171/02*(2006.01)i; *F16C 19/06*(2006.01)i; *F16C 19/18*(2006.01)i; *F16J 15/18*(2006.01)i; *F16J 15/324*(2016.01)i; *F16J 15/3232*(2016.01)i; *C10N 10/04*(2006.01)n; *C10N 20/02*(2006.01)n; *C10N 30/00*(2006.01)n; *C10N 40/02*(2006.01)n

FI:    F16C33/78 Z; C10M107/02; C10M115/08; C10M129/68; C10M135/10; C10M159/24; C10M171/00; C10M171/02; F16C19/06; F16C19/18; F16J15/18 C; F16J15/3232 201; F16J15/324; C10N10:04; C10N20:02; C10N30:00 Z; C10N40:02

According to International Patent Classification (IPC) or to both national classification and IPC

**B.    FIELDS SEARCHED**

Minimum documentation searched (classification system followed by classification symbols)

F16C33/78; C10M107/02; C10M115/08; C10M129/68; C10M135/10; C10M159/24; C10M171/00; C10M171/02; F16C19/06; F16C19/18; F16J15/18; F16J15/324; F16J15/3232; C10N10/04; C10N20/02; C10N30/00; C10N40/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2014/087979 A1 (NSK LTD.) 12 June 2014 (2014-06-12)<br>    paragraphs [0019]-[0039], [0065], fig. 1 | 1-5, 10-13 |
| A | | 6-9 |
| Y | JP 2017-207144 A (NSK LTD.) 24 November 2017 (2017-11-24)<br>    paragraphs [0014]-[0015], fig. 1 | 1-5, 10-13 |
| Y | WO 2009/144785 A1 (NSK LTD.) 03 December 2009 (2009-12-03)<br>    paragraphs [0042], [0117]-[0119], [0160]-[0163], fig. 3 | 1-5, 10-13 |

☑ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **04 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/030112**

### C. DOCUMENTS CONSIDERED TO BE RELEVANT

| Category* | Citation of document, with indication, where appropriate, of the relevant passages | Relevant to claim No. |
|---|---|---|
| Y | JP 2023-50040 A (NTN CORPORATION) 10 April 2023 (2023-04-10)<br>paragraphs [0052]-[0054], [0064]-[0066], fig. 3 | 1-5, 11-13 |
| A | | 6-10 |
| Y | JP 2006-316081 A (NTN CORPORATION) 24 November 2006 (2006-11-24)<br>paragraph [0021] | 2 |
| Y | JP 7-179879 A (NSK LTD.) 18 July 1995 (1995-07-18)<br>paragraphs [0021]-[0023] | 3 |
| A | JP 2021-148673 A (NTN CORPORATION) 27 September 2021 (2021-09-27) | 1-13 |

Form PCT/ISA/210 (second sheet) (July 2022)

## INTERNATIONAL SEARCH REPORT
### Information on patent family members

International application No.

**PCT/JP2024/030112**

| Patent document cited in search report | | | Publication date (day/month/year) | Patent family member(s) | Publication date (day/month/year) |
|---|---|---|---|---|---|
| WO | 2014/087979 | A1 | 12 June 2014 | US 2015/0307805 A1 paragraphs [0024]-[0048], [0088], fig. 1 EP 2927523 A1 CN 105008738 A | |
| JP | 2017-207144 | A | 24 November 2017 | (Family: none) | |
| WO | 2009/144785 | A1 | 03 December 2009 | US 2011/0069917 A1 paragraphs [0188], [0264]-[0266], [0312]-[0316], fig. 3 CN 102046497 A | |
| JP | 2023-50040 | A | 10 April 2023 | (Family: none) | |
| JP | 2006-316081 | A | 24 November 2006 | (Family: none) | |
| JP | 7-179879 | A | 18 July 1995 | US 5656582 A column 4, lines 21-34, tables 1-2 | |
| JP | 2021-148673 | A | 27 September 2021 | (Family: none) | |

Form PCT/ISA/210 (patent family annex) (July 2022)

**EP 4 768 744 A1**

**Patent documents cited in the description**

- JP 5110843 B
- JP 4475055 B
- JP 4997532 B